# EUROPÄISCHE PATENTANMELDUNG

(11) **EP 1 225 135 A1**
(43) Veröffentlichungstag der Anmeldung: **24.07.2002**
(21) Anmeldenummer: 02001623.4
(22) Anmeldetag: 23.01.2002
(51) Int. Cl.: B65D 81/28, B65F 1/00, B65D 65/46

(54) **Behältnis mit biegeschlaffen, folienähnlichen Behältniswänden mit antibakterieller Beschichtung**

(30) Priorität: 23.01.2001 DE 20101127 U
(71) Anmelder: Riesch, Siegfried, 82467 Garmisch-Partenkirchen (DE); Widmann, Wilhelm, 82377 Penzberg (DE)
(72) Erfinder: Riesch, Siegfried, 82467 Garmisch-Partenkirchen (DE); Widmann, Wilhelm, 82377 Penzberg (DE)
(74) Vertreter: Thoma, Lorenz

(57) **Zusammenfassung**

Die Erfindung betrifft ein Behältnis, gebildet aus biegeschlaffen, folienähnlichen Behältniswänden, mit einem Aufnahmeraum und einer verschließbaren Beschickungsöffnung, wobei die Innenflächen (20, 41) des AuEnahmeraums (19, 40) zumindest weitestgehend mit einer antibakteriellen Beschichtung(21, 42) versehen sind.

## Beschreibung

Die Erfindung betrifft ein Behältnis gebildet aus biegeschlaffen, folienähnlichen Behältniswänden, mit zumindest einem Aufnahmeraum und einer verschließbaren Beschickungsöffnung.

Es ist bekannt, Hygieneartikel, wie beispielsweise Papiertaschentücher oder dgl., in beutelähnlichen Kleintaschen aus einer biegeschlaffen, flexiblen Kunststoffolie abzupacken und in den Handel zu bringen. Bei diesen Kleintaschen, die meist quaderförmig ausgebildet sind, sind häufig Zugangsöffnungen vorgesehen, die anhand einer Umlegelasche wiederholt offenbar und wieder verschließbar sind und die ein bequemes, geordnetes Entnehmen der Hygieneartikel, wie z.B. Papiertaschentücher erlauben. Der Aufnahmeraum dieser Kleintaschen ist dabei maßlich so ausgelegt, daß eine vorbestimmte Anzahl an Hygieneartikel darin Platz finden. So ergibt sich beispielsweise bei Papiertaschentücher die Problematik, wenn diese wenigstens einmal von einem an einer Erkältung erkrankten Menschen benutzt worden sind, daß diese Papiertaschentücher in gebrauchtem Zustand entweder in der Kleidung der erkrankten Person zumindest vorübergehend aufbewahrt werden oder im Falle einer infolge der Erkältung bettlägrigen Person in einer Vielzahl in deren Nahbereich abgelegt sind. Beide Handhabungsweisen sind nicht nur äußerst unhygienisch sondern auch der raschen und zielgerichteten Gesundung der erkrankten Person wenig förderlich. Außerdem bringt insbesondere die einfach ablegende Handhabung der z.B. durch Schnupfensekret gebrauchten Papiertaschentücher bei gesunden Mitmenschen nicht selten ein gewisses Ekelgefühl mit sich und birgt darüber hinaus die nicht zu vernachlässigende Gefahr einer ansich nicht gewollten Ansteckung in sich.

Der Erfindung liegt die Aufgabe zugrunde, mit einfachen Maßnahmen eine Möglichkeit zu schaffen, gebrauchte Hygieneartikel, insbes. durch Erkältungssekret gebrauchte Papiertaschentücher, auf einfache, bequeme und zudem hygienische Weise entsorgen bzw. aufbewahren zu können.

Diese Aufgabe wird gemäß der Erfindung dadurch gelöst, daß zumindest die Innenflächen des Aufnahmeraums wenigstens weitestgehend mit einer antibakteriellen Beschichtung versehen sind.

Durch die antibakterielle Auskleidung oder Beschichtung der Innenseiten des Aufnahmeraums ist vor allem gewährleistet, daß die durch ihre Benutzung mit Erkältungssekret kontaminierten Papiertaschentücher nicht nur sehr hygienisch und die bakterielle Ansteckung gesunder Mitmenschen deutlich vermindernd aufbewahrbar sind. Zudem ist diese Art der Unterbringung und Entsorgung der kontaminierten Papier- oder Stofftaschentücher der Genesung der erkrankten Menschen sehr förderlich, da der Bakterienkreislauf durch die erfinderische Aufbewahrung unterbrochen ist.

Nach einer bevorzugten Ausführungsform des Gegenstandes der Erfindung ist vorgesehen, daß die Beschickungsöffnung durch einen durchgängig stufenlos wirkenden Verschluß verschließbar ist.

Hierdurch ist stets sichergestellt, daß die Bakterien der mit Erkältungssekret belasteten Papiertaschentücher unter Verschluß gehalten sind und damit die Ansteckungsgefahr für die Mitmenschen erheblich herabgesetzt ist. Außerdem ist ständig eine hygienische Aufbewahrung dieser Papiertaschentücher gewährleistet.

Fertigungstechnisch besonders einfach und somit in der Großserienfertigung äußerst kostengünstig bereitstellbar ist der Verschluß für die Beschickungsöffnung, wenn nach einer weiteren vorteilhaften Ausgestaltung des Gegenstandes der Erfindung vorgesehen ist, daß die Beschickungsöffnung durch eine Umlegelasche verschließbar ist, die als Verlängerung einer Seitenwandung eines tütenähnlichen Behältnisses ausgebildet ist. Darüber hinaus ist ein derartiges Verschlußprinzip besonders robust im Gebrauch.

Besonders bedienungsfreundlich im Sinne eines raschen Öffnens und Verschließens der Beschickungsöffnung einerseits und Sinne einer barrierefreien Handhabung andererseits ausgebildet ist der Verschluß, wenn nach einer nächsten bevorzugten Ausführungsform des Gegenstandes der Erfindung vorgesehen ist, daß der Verschluß für die Beschickungsöffnung als Micro-Snap-Verschluß ausgeführt ist.

Besonders sicher dauerhaft im Sinne einer Herabsetzung der Kontaminierungsgefahr für Mitmenschen durch die bakteriell belasteten Papiertaschentücher unter Verschluß gehalten sind die Papiertaschentücher, wenn nach einer weiteren bevorzugten Ausführungsform des Gegenstandes der Erfindung vorgesehen ist, daß der Verschluß für die Beschickungsöffnung als Profilverschluß ausgebildet ist.

Besonders langzeitstabil gewährleistet ist die Undurchsichtigkeit der Kunststoffolie und damit die ästhetische Aufbewahrung der mit Erkältungssekret beaufschlagten Papiertaschentücher, wenn entsprechend einer nächsten vorteilhaften Ausführungsform der Erfindung vorgesehen ist, daß das Behältnis aus einer biegeschlaffen opaken Kunststoffolie erzeugt ist.

Gemäß einer alternativen Ausführungsform des Gegenstandes der Erfindung ist vorgesehen, daß das Behältnis aus einer transparenten Kunststoffolie gebildet ist, die außenseitig mit einer die Transparenz der Beutelwände des Behältnisses zumindest vermindernden Bedruckung versehen ist.

Durch die Bedruckung wird nicht nur die Einsicht in den Aufnahmeraum des Behälters erschwert oder verhindert, sondern auch die Möglichkeit eröffnet, Verwendungshinweise oder ein entsprechendes Firmenlogo aufzubringen. Außerdem kann durch eine außenseitige Bedruckung das beutelähnliche Behältnis als Fremdreklameträger dienen oder bei einem entsprechenden Aufdruck auch Kinder bzw. heranwachsende Jugendliche dazu animieren im Krankheitsfall ihre mit Erkältungssekret beaufschlagten Papiertaschentücher in einem solchen Behältnis zwischenzulagern oder zu entsorgen.

Besonders einfach und kostengünstig ist die Entsorgung eines erfindungsgemäßen Behältnisses, befüllt mit benutzten, durch Schnupfensekret beaufschlagte Papiertaschentücher, wenn nch einer nächsten vorteilhaften Ausführungsform der Erfindung vorgesehen ist, daß die Behältniswände und der Verschluß aus biologisch abbaubaren Werkstoff gebildet sind. Als biologisch abbaubares Material eignet sich besonders Papier oder biologisch abbbaubarer Kunsstoff. Für die Entsorgung ist somit keine Werkstofftrennung notwendig. Auch eine umweltbelastende Entsorgung als Restmüll kann dadurch entfallen.

Gemäß einer alternativen Ausführungsform des Gegenstandes der Erfindung ist vorgesehen, daß das Behältnis Behältniswände erzeugt aus einer Kunststoffolie aufweist und der Verschluß aus Kunststoff gebildet ist.

Besonders barrierefrei ist die Benutzung des Behältnisses, wenn nach einer weiteren bevorzugten Ausführungsform des Gegenstandes der Erfindung vorgesehen ist, daß das Behältnis außenseitig an seinen Behältniswänden zumindest eine auf die antibakterielle Beschichtung des Aufnahmeraums hinweisenden Aufdruck aufweist.

Besonders einfach und kostengünstig herstellbar und mit den kontaminierten Papiertaschentüchern beschickbar ist das Behältnis, wenn entsprechend einer nächsten vorteilhaften Ausgestaltung des Gegenstandes der Erfindung vorgesehen ist, daß das Behältnis als rechteckförmiger Flachbeutel ausgeführt ist, der an einer seiner schmäleren Rechteckseiten mit dem stufenlos wirkenden Verschluß versehen ist.

Entsprechend einer alternativen Ausführungsform des Gegenstandes der Erfindung ist vorgesehen, daß das Behältnis als rechteckförmiger Druckverschlußbeutel ausgebildet ist, dessen Druckverschluß an einer seiner schmäleren Rechteckseiten vorgesehen ist.

Bei einem Druckverschlußbeutel ist der Verschlußmechanismus besonders robust und verschleißfest, auch bei unsachgemäßer Bedienung. Zudem ist der Verschluß auch von älteren Personen besonders problemlos öffenbar und somit das erfindungsgemäße Behältnis auch für diesen Personenkreis mit oftmals eingeschränkter oder zumindest verminderter Feinmotorik nutzbar.

Besonders günstig hinsichtlich seines Fassungsvermögens ausgebildet ist das Behältnis, wenn nach einer weitem bevorzugten Ausführungsform des Gegenstandes der Erfindung vorgesehen ist, daß das Behältnis als rechteckförmiger Seitenfaltenbeutel ausgeführt ist, der an einer seiner schmäleren Rechteckseiten mit dem Verschluß versehen ist.

Gemäß einer nächsten vorteilhaften Ausgestaltung des Gegenstandes der Erfindung ist vorgesehen, daß das Behältnis als rechteckförmiger Kordelzugbeutel mit an einer seiner schmäleren Rechteckseiten vorgesehenem Kordelzug versehen ist.

Hierdurch ergibt sich eine besonders große Beschickungsöffnung.

Entsprechend einer weiteren bevorzugten Ausführungsform des Gegenstandes der Erfindung ist vorgesehen, daß das Behältnis neben seinem Aufnahmeraum einen weiteren Aufnahmeraum ohne antibakterieller Beschichtung zur Aufnahme von unbenutzten, gefalteten Papiertaschentüchern besitzt.

Durch ein derartig aufgebautes Behältnis ist eine benutzerfreundliche Gebrauchseinheit geschaffen, die nach Aufbrauch sämtlicher unbenutzter Papiertaschentücher einheitlich entsorgbar ist. Außerdem ist durch die Bereitstellung einer solchen einstückigen Gebrauchseinheit von einer an einer Erkältung erkrankten Person lediglich ein Behältnis mitzuführen. Die umständliche Handhabung zweier Behältnisse erübrigt sich.

Besonders günstig mit der antibakteriellen Beschichtung im Aufnahmeraum versehen läßt sich das beutelähnliche Behältnis, wenn nach einer weiteren bevorzugten Ausführungsform des Gegenstandes der Erfindung vorgesehen ist, daß das Behältnis aus einer biegeschlaffen Polyäthylenfolie erzeugt ist. Ein Behältnis aus Polyäthylenfolie ist darüber hinaus besonders strapazierbar und dennoch kostengünstig herzustellen.

Besonders zweckmäßig ausgebildet ist ein Behältnis, wenn nach einer letzten bevorzugten Ausführungsform des Gegenstandes der Erfindung vorgesehen ist, daß das Behältnis als Aufnahmebehältnis für mit Erkältungssekret beaufschlagte Papiertaschentücher nach einem der Ansprüche 1 bis 14 ausgebildet ist.

Die Erfindung ist in der nachfolgenden Beschreibung anhand von zwei in der beigefügten Zeichnung vereinfacht dargestellten Ausführungsbeispielen erläutert. Es zeigen:

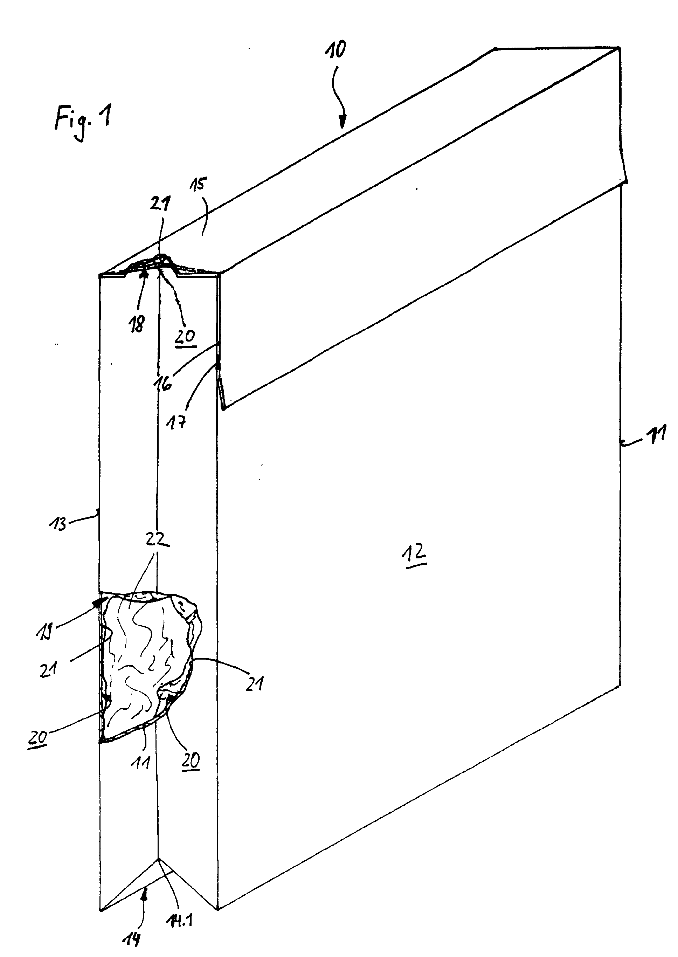

Fig. 1: ein erstes erfindungsgemäßes Behältnis, teilweise aufgebrochen dargestellt, ausgeführt als aus opaker Polyäthylenfolie erzeugter Seitenfaltenbeutel, mit als Umlegelasche ausgeführter, dessen Beschickungsöffnung verschliessender Verschluß, in raumbildlicher Ansicht von der Seite,

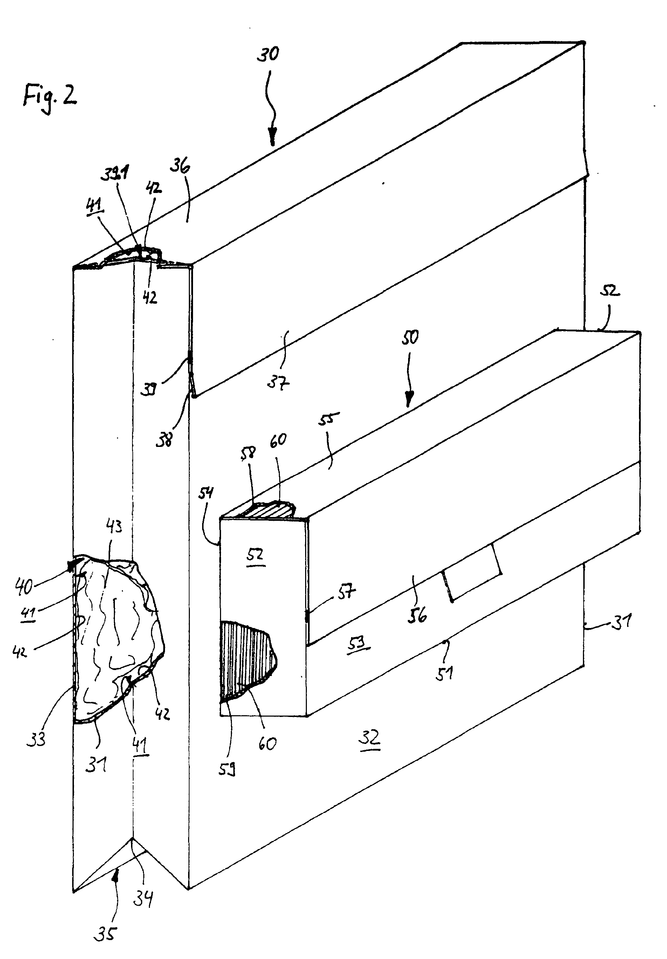

Fig. 2: eine zweite Ausführungsform eines erfindungsgemäßen, teilweise aufgebrochen dargestellten Behältnisses, ausgebildet als opaker Polyäthylenfolie hergestellter Seitenfaltenbeutel, mit einem weiteren Aufnahmehältnis zur Einbringung von unbenutzten Papiertaschentüchern, in raumbildlicher Ansicht von der Seite.

Gemäß Figur 1 ist eine erste Ausführungsform der Erfindung, nämlich ein aus biegeschlaffer Polyäthylenfolie gebildeter, als Aufnahmebehältnis dienender Seitenfaltenbeutel 10 gezeigt, dessen Seitenwände 11 zusammen mit einer Frontwand 12 einer Rückwand 13 und einer Bodenwand 14 mit einer Falte 14.1. aus opakem Folienmaterial gefertigt sind. Die Rückwand 13 weist an ihrer der Bodenwand 14 gegenüberliegenden Seite eine einstückig mitangeformte umlegbare Lasche 15, auf die an der Innenseite ihres freien Endes 16 mit einem zumindest nahezu über die Gesamtbreite der Lasche 15 verlaufenden Verschlußelement 17 versehen ist, das im vorliegenden Fall als auf die Lasche 15 aufgebrachte, zur öfteren Verwendung geeignete streifenartige Klebeschicht ausgebildet ist. Die Lasche 15 ist als Verschluß für eine am oberen Ende des Seitenfaltenbeutels 10 angeordnete Beschickungsöffnung 18 vorgesehen. Über die Beschickungsöffnung 18 ist ein von den Wandungen 11 bis 14 umgrenzter Aufnahmeraum 19 zugänglich, der antibakteriell behandelt ist, in der Form, daß die Wandungen 11 bis 14 und die Lasche 15 an ihren dem Aufnahmeraum 19 zugewandten Innenseiten 20 mit einer antibakteriellen Beschichtung 21 versehen sind. Der Aufnahmeraum 19 dient zur Einbringung von durch Erkältungssekret kontaminierten, benutzten Papiertaschentüchern 22, die über die, die Gesamtbreite des Seitenfaltenbeutels 10 einnehmende Beschickungsöffnung 18 in den Aufnahmeraum 19 einbringbar sind. Innerhalb des Aufnahmeraums 19 sind die gebrauchten Papiertaschentücher 22 durch die opake Ausführung der Polyäthylenfolie von außen uneinsehbar und folglich in ästhetischer Art und Weise sowie durch die antibakterielle Ausstattung des Aufnahmeraumes 19 derart verwahrt, daß eine Übertragung einer Erkältungskrankheit durch die kontaminierten Papiertaschentücher 22 auf noch gesunde Mitmenschen zumindest weitestgehend vermieden ist. Außerdem ist die hygienische Aufbewahrung der mit Erkältungssekret, wie beispielsweise Schnupfenflüssigkeit oder dgl., belasteten Papiertaschentücher 22 dem Gesundungsprozeß der an einer Erkältung erkrankten Person zuträglich.

Figur 2 zeigt ein alternatives Ausführungsbeispiel eines aus biegeschlaffer Polyäthylenfolie hergestellten Seitenfaltenbeutels 30, der als Aufnahmebehältnis vorgesehen ist. Wie der Seitenfaltenbeutel 10 besitzt der Seitenfaltenbeutel 30 zwei Seitenwände 31. Die Seitenwände 31 sind einstückig mit einer Frontwand 32, einer Rückwand 33 und einem eine Falte 34 aufweisenden Boden 35 verbunden. An die Rückwand 33 ist an ihrer dem Boden 35 gegenüberliegenden Oberseite einstückig eine Umlegelasche 36 mitangeformt, deren Breite zumindest annähernd der Breite des Seitenfaltenbeutels 30 entspricht und deren freies, bis in den oberen Abschnitt der Frontwand 32 reichendes Ende 37 einen auf ihrer frontwandseitigen Innenseite 38 aufgebrachten wiederholt benutzbaren streifenartigen Klebestreifen 39 aufweist. Mit Hilfe dieses Klebestreifens 39 ist die Umlegelasche 36 lösbar an der Frontwand 32 befestigbar. Im Befestigungszustand verschließt die Umlegelasche 36 eine dem Boden 35 gegenüberliegend angeordnete, am Seitenfaltenbeutel 30 über dessen gesamte Breite verlaufende Beschickungsöffnung 39.1. Über diese ist ein, von den Wandungen 31, 32, 33 und 35 umgrenzter Aufnahmeraum 40 zugänglich, der durch die opake Ausbildung der Wandungen 31, 32, 33 und 35 im Schließzustand der ebenfalls opak ausgebildeten, biegeschlaffen Umlegelasche 36 von außen nicht einsehbar ist. Die Wandungen 31,32, 33 und 35 sind wie die Umlegelasche 36 an ihren dem Aufnahmeraum 40 zugekehrten Innenseiten 41 mit einer antibakteriellen, langzeitwirkenden Beschichtung 42 versehen. Die Beschichtung 42 dient zur Keim- und Bakterienabtötung von in den Aufnahmeraum 40 durch eine erkältete Person eingebrachten und mit Erkältungssekret kontaminierten Papiertaschentüchern 43. Durch die Unterbringung der benutzten und mit Erkältungssekret beaufschlagten Papiertaschentücher 43 sind diese für gesunde Mitmenschen uneinsehbar und damit auf ästhetische Art und Weise verwahrt. Gleichzeitig ist durch antibakterielle Beschichtung und Auskleidung des Aufnahmeraums 40 die Ansteckungsgefahr für gesunde Mitmenschen vermindert und auch Gesundungsverlauf der erkrankten Person gefördert.

Der Seitenfaltenbeutel 30 besitzt auf seiner Frontwand 32 ein zusätzliches Aufnahmebehältnis 50 mit einer Bodenwand 51, zwei Seitenwänden 52, einer Frontwand 53 sowie einer Rückwand 54, die auch durch einen entsprechenden Abschnitt der Frontwand 32 des Seitenfaltenbeutels 30 gebildet sein kann. Die Rückwand 54 weist wie die Rückwand 33 des Seitenfaltenbeutels 30 eine an ihrem oberen Ende vorgesehene Verlängerung auf, die als Umlegelasche 55 dient. Die Umlegelasche 55 ist an der Innenseite ihres freien Endes 56 mit einer zumindest annähernd über ihre Gesamtbreite angeordnete streifenartige Klebeschicht 57 ausgestattet, mit der das freie Ende der Umlegelasche 55 außenseitig an der Frontseite 53 lösbar gehalten ist. Durch die Umlegelasche 55 ist eine Beschickungsöffnung 58 zugänglich, über die auf einen Aufnahmeraum 59 zugegriffen werden kann, der durch die Wände 51 bis 54 und die Umlegelasche 55 umschlossen ist. Der Aufnahmeraum 59 dient zur Aufbewahrung von unbenutzten, serienmäßig gefalteten Papiertaschentüchern 60 in mehreren Lagen nebeneinander. Die aufbewahrten Papiertaschentücher 60 können bei geöffneter Umlegelasche 55 über die Beschickungsöffnung 58 entweder stückweise oder als Ganzes aus dem Aufnahmeraum 59 entnommen werden. Das zusätzliche Aufnahmebehältnis 50 ist in vorteilhafter Weise einstückig an die Frontwand 53 des Seitenfaltenbeutels 30 mitangeformt.

Alternativ als Verschluß für die Beschichmgsöffnung 18, 39 und 58 kann ein über deren gesamte Länge angeordneter, im Handel befindlicher Druck- oder Micro-Snap-Verschluß bzw. ein Profilverschluß vorgesehen sein.

## Patentansprüche

1. Behältnis gebildet aus biegeschlaffen, folienähnlichen Behältniswänden, mit einem Aufnahmeraum und einer verschließbaren Beschickungsöffnung, **dadurch gekennzeichnet., daß** die Innenflächen (20, 41) des Aufnahmeraums (19, 40) zumindest weitestgehend mit einer antibakteriellen Beschichtung(21, 42) versehen sind.

2. Behältnis nach Anspruch 1, **dadurch gekennzeichnet, daß** die Beschickungsöffnung (18, 39.1) durch einen durchgängigen stufenlos wirkenden Verschluß (15, 36) verschließbar ist.

3. Behältnis nach Anspruch 1 oder 2, **dadurch gekennzeichnet, daß** die Beschickungsöffnung (21, 42) durch eine Umlegelasche (15, 36) verschließbar ist, die als Verlängerung einer Seitenwandung (13, 33) eines tütenähnlichen Behältnisses (10, 30) ausgebildet ist

4. Behältnis nach Anspruch 1 oder Anspruch 2, **dadurch gekennzeichnet, daß** der Verschluß für die Beschickungsöffnung (18, 39.1)als Micro-Snap-Verschluß ausgebildet ist.

5. Behältnis nach Anspruch 1 oder Anspruch 2, **dadurch gekennzeichnet, daß** der Verschluß als Profilverschluß ausgebildet ist.

6. Behältnis nach einem der Ansprüche 1 bis 5, **dadurch gekennzeichnet, daß** das Behältnis (10, 30) aus Kunststoff aus biologisch abbaubarem Werkstoff gebildet sind.

7. Behältnis nach einem der Ansprüche 1 bis 5, **dadurch gekennzeichnet, daß** das Behältnis (10, 30) Behältniswände (11, 12, 13, 14, 31, 32, 33, 35) aus einer Kunststoffolie aufweist und der Verschluß (15, 36) aus Kunststoff gebildet ist

8. Behältnis nach einem der Ansprüche 1-7, **dadurch gekennzeichnet, daß** das Behältnis (10, 30) aus einer biegeschlaffen opaken Kunststoffolie erzeugt ist.

9. Behältnis nach einem der Ansprüche 1-7, **dadurch gekennzeichnet, daß** das Behältnis (10, 30) aus einer transparenten Kunststoffolie gebildet ist, die außenseitig mit einer die Transparenz der Beutelwände des Behältnisses (10, 30) zumindest vermindernden Bedruckung versehen ist.

10. Behältnis nach einem der Ansprüche 1-9, **dadurch gekennzeichnet, daß** das Behältnis (10, 30) außenseitig zumindest an einer seiner Behältniswände (11, 12, 13, 14; 31, 32, 33, 35) wenigstens eine auf die antibakterielle Beschichtung (21, 42) des Aufnahmeraums (19, 40) hinweisende Bedruckung aufweist.

11. Behältnis nach einem der Ansprüche 1-10, **dadurch gekennzeichnet, daß** das Behältnis (10, 30) als rechteckförmiger Flachbeutel ausgebildet ist, der an einer seiner schmäleren Rechteckseiten mit dem Verschluß (15, 36) versehen ist.

12. Behältnis nach einem der Ansprüche 1 bis 10, **dadurch gekennzeichnet, daß** das Behältnis (10, 30) als rechteckförmiger Druckverschlußbeutel ausgebildet ist, dessen Druckverschluß an einer seiner schmäleren Rechteckseiten vorgesehen ist.

13. Behältnis nach einem der Ansprüche 1 bis 10, **dadurch gekennzeichnet, daß** das Behältnis als rechteckförmiger Seitenfaltenbeutel (10, 30) ausgeführt ist, der an einer seiner schmäleren Rechteckseiten mit dem Verschluß (15, 36) versehen ist.

14. Behältnis nach einem der Ansprüche 1 bis 10, **dadurch gekennzeichnet, daß** das Behältnis (10, 30) als rechteckförmiger Kordelzugbeutel mit an einer seiner schmäleren Rechteckseiten vorgesehenem Kordelzug ausgestattet ist.

15. Behältnis nach einem der Ansprüche 1 bis 14, **dadurch gekennzeichnet, daß** das Behältnis (30) neben seinem Aufnahmeraum (40) einen weiteren Aufnahmeraum (59) ohne antibakterielle Beschichtung zur Aufnahme von unbenutzten, gefalteten Papiertaschentüchern (60) besitzt.

16. Behältnis nach einem der Ansprüche 1 bis 15, **dadurch gekennzeichnet, daß** das Behältnis (10, 30) aus einer biegeschlaffen Polyäthylenfolie erzeugt ist.

17. Aufnahmebehältnis für mit Erkältungssekret beaufschlagte Papiertaschentücher, **gekennzeichnet durch** die Ansprüche 1 bis 16.
